# EUROPEAN PATENT APPLICATION

(11) **EP 0 539 656 A1**
(43) Date of publication of application: **05.05.1993**
(21) Application number: 92110440.2
(22) Date of filing: 20.06.1992
(51) Int. Cl.: F16K 5/06

(54) **Ball valve**

(30) Priority: 11.10.1991 IT MI912701
(71) Applicant: FIMCIM S.r.l., I-20121 Milano (IT)
(72) Inventor: Cimberio, Renzo, I-28017 S. Maurizio d'Opaglio (IT)
(74) Representative: Mayer, Hans Benno, Dipl.-Ing.

(57) **Abstract**

Kugelventil, bei dem zum Vermindern eines hohen Drehmomentes bei Betaetigen des Absperrgliedes, die Dichtungsringe zur Aufnahme des Absperrgliedes U-foermigen Querschnitt aufweisen, wobei sich umfangsseitig abstehende Fluegel (16) des U-foermigen Dichtungsringes (9) nach aussen erstrecken und eine einwandfreie Dichtwirkung auch fuer heisse Fluessigkeiten und Dampf erzielt wird.

## Description

Die vorstehende Erfindung betrifft ein Kugelventil. In bekannten Ventilen dieser Art ist das kugelfoermig ausgebildete Absperrglied im Ventilkoerper zwischen zwei ringfoermigen, sich gegenueberliegenden Dichtungen angeordnet. Die Oeffnungs- oder Schliessbewegung des Absperrgliedes erfolgt durch eine Drehbewegung ueber einen Winkel von 90°. Ueblicherweise haben die verwendeten Dichtungsringe viereckigen Querschnitt und die Kante des Ringes, die auf die Ventilkugel zu gerichtet ist, weist eine Abflachung auf. Die Dichtwirkung wird durch Einbau des Absperrgliedes unter Druck zwischen den Dichtringen erzielt. Der Ventilkoerper kann aus einem oder mehreren Bauteilen bestehen. Es ist bekannt, die Dichtungsringe fuer das Absperrglied in Kunststoff, z.B. Polytetrafluoraethylen (PTFE) auszubilden, dies um die gute Eigenschmierung dieser Materialien zu nuetzen.

Die bekannten Kugelventile weisen den Nachteil auf, dass bei Einleiten einer Drehbewegung des Absperrgliedes ein hohes Anfangsdrehmoment aufzubringen ist. Dieses aufzubringende Drehmoment weist wesentlich hoehere Werte als das Drehmoment fuer die blosse Betaetigung des Absperrelementes (Oeffnen oder Schliessen) des Ventiles auf. Dieses erhoehte Anfangs-Drehmoment ist darauf zurueckzufuehren, dass bei Durchfuehrung einer Oeffnungs- oder Schliessbewegung des Kugelventiles eine erhebliche Reibkraft zwischen Kugel- und Ringdichtung zu ueberwinden ist und erst nach Ueberwindung dieser anfaenglich wirkenden Reibkraft die gute Gleiteigenschaft der aus Polytetrafluoraethylen gefertigten Dichtungsringe zum Tragen kommen. Das Anfangsdrehmoment kann Werte einnehmen, die wesentlich ueber dem Doppelten des ueblichen Betaetigungsmomentes des Kugelventiles liegen, wobei dieser Wert mit groesser werdender Kugel zunimmt. Es ist auch bekannt geworden, dass das aufzubringende Anfangsmoment zum Betaetigen eines Kugelventiles bei laengerem Nichtbetaetigen des Ventiles noch weiter ansteigt.

Haeufig tritt auch der Fall ein, dass bei einer Schliessbewegung an einem Kugelventil, das fuer laengere Zeit geoeffnet war, ein sehr hohes Anfangsdrehmoment aufzubringen ist und zum Aufbringen dieses sehr hohen Anfangsmomentes, der Betaetigungshebel des Kugelkoerpers ueber ein Rohrstueck zu verlaengern ist.

Die beschriebenen Nachteile treten in verstaerktem Masse in jenen Kugelventilen auf, die z.B. in Anlagen zum Verteilen von Heisswasser oder Dampf eingesetzt werden. Dabei ist bekannt, dass Dichtungsringe aus Polytetrafluoraethylen bei ca. 50°C einer verstaerkten Waermedehnung unterliegen. Aus diesem Grund sind die Einsatzmoeglichkeiten von Kugelventilen auf diesen Gebieten der Technik sehr begrenzt.

Es wurde bereits versucht, diese Nachteile auf verschiedene Weisen zu beheben, so wurden z.B. die Dichtungsringe oder die Bauteile des Kugelventiles technischen Aenderungen unterzogen. Es wurde vorgeschlagen, lippenartige Vorspruenge auf der abgeflachten Seite des Dichtungsringes, die zur Ventilkugel hin gerichtet war, vorzusehen. Es konnte dabei aber festgestellt werden, dass auch die Vorsehung von Dichtlippen nicht geeignet war, das Anfangsdrehmoment zum Betaetigen des Kugelventiles abzusenken. Durch den Einsatz von Lippendichtungen konnte auch kein einwandfreies Abdichten der Ventilbauteile erzielt werden.

Es wurde weiterhin vorgeschlagen, die Radialseite der Ventilsitze im Ventilkoerper geneigt auszubilden. Diese Loesung erfordert einen groesseren Arbeitsaufwand und konnte nicht dazu beitragen, das Anfangsdrehmoment wesentlich zu verringern, ferner war mit einer Verschlechterung der Abdichtwirkung zu rechnen.

Bei groesseren Ventilen ist vorgeschlagen worden, im Ventilkoerper einen Dichtungsring mit Kreisquerschnitt anzuordnen oder bei groesseren Ventilkoerpern aus Stahl wurde vorgeschlagen, Tellerfedern zwischen der Dichtungslippe und den Dichtungsringen anzuordnen. Neben der Notwendigkeit, den Ventilkoerper in diesem Fall zusaetzlichen Bearbeitungsvorgaengen zu unterziehen, ist es dabei erforderlich, zusaetzliche Bauteile vorzusehen. Selbst bei dieser bekannten Ausfuehrungsform war es aber nicht moeglich, das Anfangsdrehmoment wesentlich zu verringern und eine einwandfreie Abdichtung des Ventiles zu gewaehrleisten.

Aufgabe der vorstehenden Erfindung ist es, ein Kugelventil vorzuschlagen, das mit Dichtungsmitteln ausgeruestet ist, die es erlauben, die Nachteile des Standes der Technik bekannter Kugelventile und deren Dichtungsmittel zu beheben und eine einwandfreie Abdichtung zu gewaehrleisten und das bei Betaetigen des Absperrelementes auftretende Drehmoment wesentlich zu vermindern.

Die Aufgabe wird erfindungsgemaess dadurch geloest, dass die Dichtungsringe zur Aufnahme des kugelfoermig ausgebildeten Absperrelementes U-foermigen Querschnitt aufweisen und dass die Fluegel des U-foermigen Koerpers radial nach aussen gerichtet sind.

Die Vorteile, die mit einer derartigen Ausbildung erzielt werden, bestehen darin, dass die eintretende Federwirkung der Dichtungsringe dazu fuehrt, dass das Anfangsdrehmoment sowie das Betaetigungsmoment des Kugelventiles wesentlich gesenkt wird, ohne dass dafuer zusaetzliche Bearbeitungsvorgaenge am Ventilkoerper oder die Vorsehung zusaetzlicher Bauteile erforderlich waere. Gleichzeitig wird der Abrieb der Dichtungsringe verringert. Die Ventilkoerper des Kugelventiles koennen beliebige Form aufweisen, d.h. die Ventilkoerper koennen einstueckig oder mehrstueckig ausgebildet sein. Die Dichtungsringe koennen kostenguenstig aus synthetischem Material hergestellt werden, z.B. aus Kunststoff, besonders aus Polytetrafluoraethylen, wobei die Herstellung der Dichtringe auf herkoemmliche Weise, durch einen Drehvorgang oder ein Formpressverfahren, erfolgt. Dies fuehrt zu keinen zusaetzlichen groesseren Fertigungskosten.

Die erfindungsgemaess ausgebildeten Kugelventile arbeiten zuverlaessig auch beim Foerdern sehr heisser Fluessigkeiten, Gasen oder Daempfen. Bei Vorsehen eines elektrisch angetriebenen Betaetigungsgeraetes des Ventilkoerpers kann das Betaetigungsgeraet mit wesentlich geringerer Leistung ausgelegt werden, als dies bisher zum Betaetigen der Absperrelemente in herkoemmlichen Kugelventilen erforderlich war. Das Absperrelement an sich kann kleiner und billiger ausgebildet werden. Das Absperrelement wird zudem gleichmaessiger belastet, was zu einer groesseren Lebensdauer fuehrt.

Es besteht die Moeglichkeit, das Anfangsbetaetigungsmoment um mehr als 50 % gegenueber vergleichbaren Kugelventilen dadurch zu senken, dass die zur Absperrkugel hin gerichteten Seiten des Dichtungsrings geneigt aufeinander zulaufend ausgebildet sind, wodurch ein Anlagekeil auf der Innenseite des Dichtungsringes fuer eine verbesserte Abdichtwirkung gebildet wird.

Die Erfindung betrifft auch einen Dichtungsring mit U-foermigem Querschnitt zur Herstellung eines verbesserten Kugelventiles.

Ein Ausfuehrungsbeispiel der Erfindung ist in den beigefuegten Zeichnungen dargestellt und wird im Anschluss genauer beschrieben.

Es zeigen:
Fig. 1 einen Laengsschnitt durch ein vormontiertes Kugelventil;
Fig. 2 einen Laengsschnitt des Ventils nach Fig. 1, aber bei montiertem Kugelventil;
die Fig. 3 und 4 in vergroessertem Maßstab, die Einzelheiten A und B der Fig. 1 und 2; und
Fig. 5 in vergroessertem Maßstab einen Querschnitt durch einen erfindungsgemaess ausgebildeten Dichtungsring mit einem Teilstueck eines kugelfoermigen Absperrgliedes.

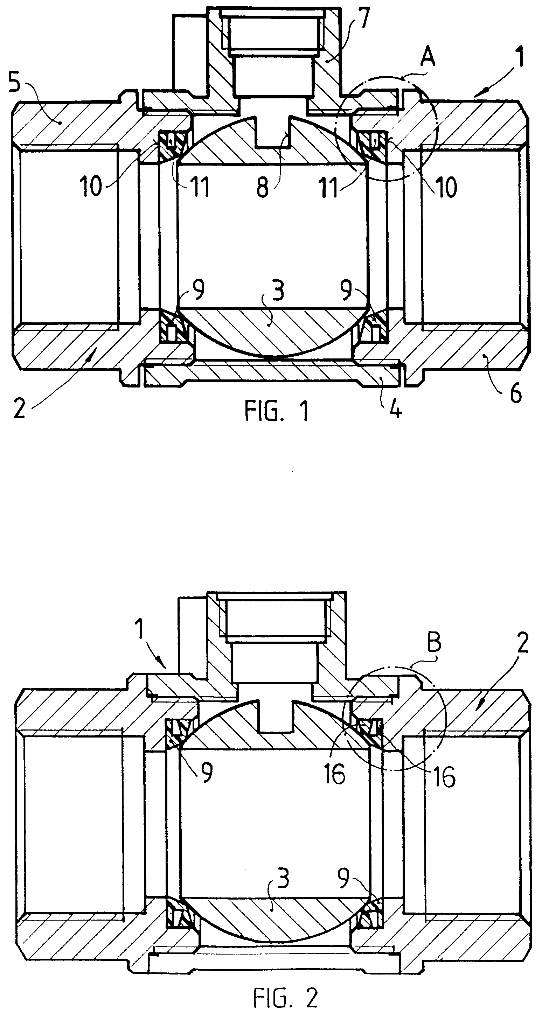

In Fig. 1 ist ein Kugelventil 1, bestehend aus einem Ventilkoerper 2 und einem kugelfoermigen Absperrglied 3 dargestellt. Der Ventilkoerper 2 besteht aus einem mittleren Teilstueck 4 und zwei Anschlußstutzen 5 und 6, die mit einem Zuflussrohr und einem Abflussrohr verbindbar sind.

In einen Stutzen 7, der vom Mittelstueck 4 abragt, ist eine nicht dargestellte Antriebsstange eingesetzt, die mit einem Ende im Inneren des Ventilkoerpers mit einer Ausnehmung 8 des kugelfoermigen Absperrgliedes 3 in Wirkverbindung steht. Das aeussere Ende der Antriebsstange ist mit einem ueblichen Betaetigungshebel, einem Handrad oder einem elektrischen Antriebsgeraet verbunden.

Das kugelfoermige Absperrglied 3 ist zwischen zwei sich gegenueberliegenden Dichtungsringen 9 gelagert. Die Dichtungsringe 9 sind jeweils in Ausnehmungen 10 angeordnet, die z.B. in die Stutzen 5 und 6 eingearbeitet sind.

Nach Vormontage des Kugelventils, wie in Fig. 1 dargestellt, wird der Montagevorgang abgeschlossen, indem die Stutzen 5 und 6 vollstaendig in den Ventilkoerper 4 eingeschraubt werden. Dabei werden die Dichtungsringe 9 gegen das kugelfoermig ausgebildete Absperrelement gepresst.

Hier setzt nun die Erfindung ein, die eine besondere Ausbildung der Dichtringe 9 vorsieht, ohne dazu eine Abaenderung des Ventilkoerpers notwendig zu machen, d.h. die bereits vorhandenen und ueblichen Ausnehmungen 10 koennen weiter verwendet werden, ohne zusaetzliche Bauteile vorsehen zu muessen.

Erfindungsgemaess weist jeder Dichtungsring 9 im Querschnitt U-foermige Gestalt auf. Die Fluegel oder Arme 16 des U-foermigen Koerpers sind radial nach aussen gerichtet.

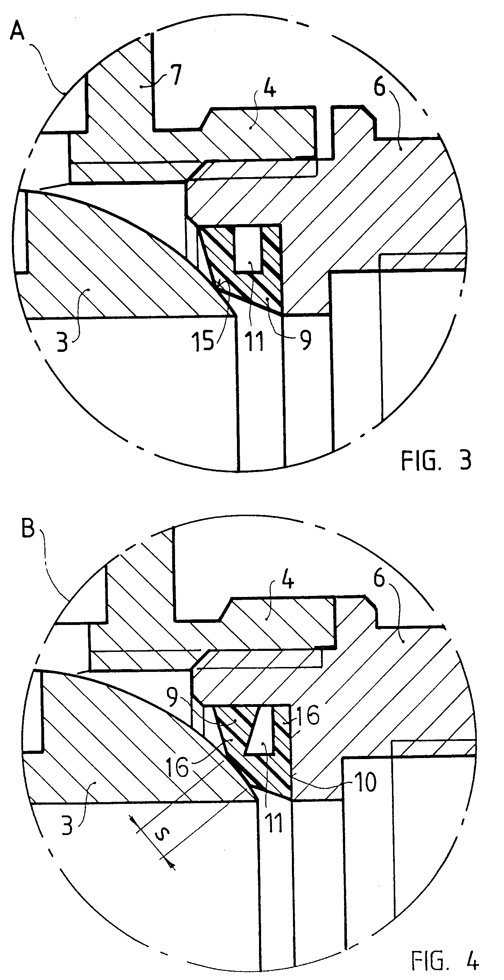

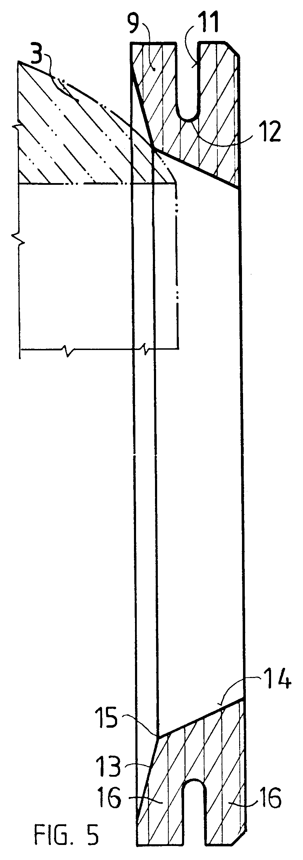

Im dargestellten Beispiel nach Fig. 1 bis 4, bilden die abstehenden Fluegel 16 des U-foermig ausgebildeten Dichtungsringes 9 in Ruhelage gemaess Fig. 5 oder in vormontierter Stellung gemaess Fig. 1, 3 eine Ringnut 11, durch die ein elastisches Federelement gebildet wird. In vorteilhafter Weise hat die Nut rechteckigen Querschnitt und ist radial nach aussen geoeffnet.

Im Ausfuehrungsbeispiel nach Fig. 5 weist die Ringnut 11 einen abgerundeten Nutgrund 12 auf. Es sind natuerlich auch andere Ausfuehrungsformen fuer die Nut 11 denkbar.

In den dargestellten Ausfuehrungsbeispielen sind die zur Ventilkugel 3 hin gerichteten Seiten 13 und 14 des Dichtungsringes 9 gegeneinander geneigt angeordnet und bilden einen ringfoermigen, umlaufenden Keil, der als Dichtkante 15 dient (Fig. 3 und 5).

Die Wirkungsweise des Ventils und des Dichtungsringes ist folgende:
Geht man von der vormontierten Anordnung des Ventils gemaess Fig. 1, 3 und 5 aus, so wird erkenntlich, dass bei Montage des Kugelventiles nach Fig. 2, 4 die Dichtungsringe 9 gegen das kugelfoermige Absperrelement 3 gedrueckt werden. Wie in den Zeichnungen dargestellt, erfolgt dabei eine Verformung der ringfoermig verlaufenden Kante 15 sowie der umlaufenden Nut 11 wie in Fig. 4 dargestellt. Die Vorsehung der Nut 11, ruft eine Federwirkung hervor, und fuehrt zu einer Aenderung des elastischen Verhaltens des Dichtringes 9. Es wird eine einwandfreie Abdichtung erzielt und gleichzeitig wird der Fluegel der U-foermig ausgebildelten Dichtungsringe gegen das kugelfoermige Absperrelement gepresst. Am Umfang des Dichtungsringes 9 wird eine zulaufende Umfangslinie 15 gebildet, die als Kontaktlinie an dem kugelfoermigen Absperrelement 3 anliegt. Diese Kontaktflaeche ist mit (s) in Fig. 4 dargestellt.

Durch Ausbilden der Dichtungsringe 9 in PTFE werden Verminderungen des Anfangsmomentes bei Betaetigen des Ventils von mehr als 50 % erzielt.

Zum Beispiel bei einem Kugelventil mit einem Durchmesser von 42 mm fuer das kugelfoermige Absperrglied, konnte ein Anfangsmoment von 7,5 Nm gemessen werden und ein Betaetigungsmoment von 3 Nm.

Durch Austausch der herkoemmlichen Dichtungsmittel mit den erfindungsgemaess vorgeschlagenen Dichtungsringen wurde ein Anfangsmoment von 3,5 Nm und ein Betaetigungsmoment von nur 1,3 Nm gemessen.

Die Verminderung des Antriebs- und Betaetigungsmomentes kann auch von Hand bei Betaetigen des Kugelventiles festgestellt werden. Die U-foermig ausgebildeten Dichtungsringe werden weniger stark belastet und erlauben ein einwandfreies Abdichten auch bei Einsatz des Kugelventiles in Heisswasser- oder Dampfleitungen. Es wurden einwandfreie Abdichtergebnisse in einem Temperaturbereich von -20°C bis +180°C festgestellt.

Die erfindungsgemaessen Dichtungsringe koennen auch aus anderen geeigneten Kunststoffen hergestellt werden.

## Claims

1. Kugelventil (1) mit einem kugelfoermig ausgebildeten Absperrglied (3), das drehbar in einem Ventilkoerper (4) zwischen zwei sich gegenueberliegenden Dichtungsringen (9) angeordnet ist**, dadurch gekennzeichnet,** dass die Dichtungsringe (9) zur Aufnahme des kugelfoermigen Absperrelementes (3) im Querschnitt U-foermig ausgebildet sind und die Fluegel (16) des U-foermigen Dichtungsringes (9) radial nach aussen gerichtet sind.

2. Kugelventil nach Patentanspruch 1, **dadurch gekennzeichnet,** dass die Seiten (13,14) des Dichtringes (9), die auf das kugelfoermigen Absperrelement (3) gerichtet sind, schraeg aufeinder zulaufen und eine Abdichtkante (15) bilden.

3. Dichtungsring fuer Kugelventile, **dadurch gekennzeichnet****,** dass der Dichtungsring (9) die Merkmale nach Anspruch 1 und 2 aufweist.
